# EUROPEAN PATENT APPLICATION

(11) **EP 0 945 648 A1**
(43) Date of publication of application: **29.09.1999**
(21) Application number: 99200948.0
(22) Date of filing: 26.03.1999
(51) Int. Cl.: F16G 11/12, E04C 3/08

(54) **Tensioning device for tension bars and/or compression bars or like elements**

(30) Priority: 26.03.1998 NL 1008721
(71) Applicant: Constructiebedrijf Willems B.V., 6657 CP Boven Leeuwen (NL)
(72) Inventor: Willems, Johannes Maria Antonius, 6658 AE Beneden-Leeuwen (NL)
(74) Representative: Ottevangers, Sietse Ulbe

(57) **Abstract**

A tensioning device (1) for tension bars and/or compression bars or like elements, comprising at least one tension rod (2) and at least one fastening element to be referred to as fork (4), the tension rod being provided, adjacent at least one end thereof, with a first external screw thread (7) and the fork being provided with a bore (23) having first internal screw thread, the fork comprising fastening means, characterized in that a tensioning element (3) is provided for coupling the at least one tension rod (2) and the at least one fork (4), the tensioning element having a first side thereof provided with second internal screw thread (18) for mating with the first external screw thread (7) and having a second side thereof provided with second external screw thread (12) for mating with the first internal screw thread, the arrangement being such that through relative rotation of the tensioning element with respect to the fork and/or the tension rod, a longitudinal displacement of the fork with respect to the tension rod is effected.

## Description

The invention relates to a tensioning device according to the preamble of claim 1. Such a tensioning device is known from NL 8500510.

For manufacturing constructions where structural members are supported by, for instance, cables or bars, such as, for instance, a wind bracing, tensioning devices of the subject type are normally employed. In those devices, a fork-shaped fastening element is screwed on both ends of a tension rod by means of external screw thread provided on the tension rod and mating internal screw thread in a bore of the forks. Next, by means of a transverse pin extending through the arms of the relevant fork, an eye of, for instance, a cable is attached to the relevant fork, such that the tensioning device is suspended between the two relevant structural elements. The different screw threads of the tensioning device are designed so that upon rotation of the tension rod relative to the forks, the forks are displaced relative to each other in longitudinal direction of the tension rod, so that the distance therebetween is either reduced or increased. Thus, the tension in and/or the position of the structural elements can be altered.

This known tensioning device has as a drawback that the adjustability thereof is limited by the maximal length of the mating screw threads, in particular the maximal depth of the bore in the fork, less the minimally required screw-in depth, which is determined by, in particular, the loads to be expected. This means that for obtaining a suitable adjusting range, relatively long forks must be used, which is unfavorable in terms of production, that the tensioning device offers a less pleasant appearance and that, moreover, it is relatively costly. Further, this known tensioning device has the drawback that rotation of the tension rod relative to at least one of the forks is necessary for effecting a longitudinal displacement thereof, possibly involving an angular displacement of one fork relative to the other fork, which may be undesirable from a constructional viewpoint. Moreover, such tensioning device requires specific provisions for enabling rotation of the tension rod, for obtaining the desired setting. This renders such tension rod relatively costly and moreover entails the risk of reducing the permissible load on the tension rod.

The object of the invention is to provide a tensioning device of the type described in the introduction, wherein the drawbacks of the known tensioning device are avoided and the advantages thereof are maintained. To that end, a tensioning device according to the invention is characterized by the features of the characterizing part of claim 1.

In the present application, 'fork' should at least be understood to mean a fastening element which is fork-shaped or eye-shaped. In a general sense, 'fork' denotes any element suitable for attaching a cable, bar, plate, block or like structural element.

In a tensioning device according to the present invention, the fork is coupled to the tension rod by means of the tensioning element, such that at least a longitudinal displacement of the fork relative to the tension rod can be obtained through rotation of the tensioning element. In this context, 'longitudinal' should be understood to mean approximately parallel to the longitudinal axis of the relevant part of the tension rod. Since the tensioning element is provided with internal screw thread as well as external screw thread, rotation thereof causes the fork, when rotation thereof is prevented, to be displaced over a first longitudinal distance, while the tension rod, when rotation thereof is prevented, will be displaced in opposite direction over a second longitudinal distance. This means that by relatively short lengths of screw thread, a relatively great displacement of the fork relatively to the tension rod can be realized (the sum of the two longitudinal distances). Thus, with relatively small parts, a relatively great adjustability can be obtained. Further, the tensioning element offers the advantage that the fork can be longitudinally adjusted relative to the tension rod without the fork having to be rotated with respect to the tension rod. This means that a desired position of the fork can in each case be achieved, regardless of the longitudinal position of the fork relative to the tension rod.

Further, the tensioning device according to the present invention offers the advantage that at both ends of a tension rod, the same fork can in principle be used, unlike the known tensioning device, where left-hand and right-hand screw threads should be applied on respectively the first and the opposite second end of the tension rod, in order to achieve the desired setting. Hence, only one type of fork and only one type of tensioning element should be held in stock. For that matter, it is observed that it is of course also possible to apply tension rods of the known type, having opposite screw threads on both ends, which enables the use of tensioning elements and/or forks adapted thereto. The advantage thus achieved is that rotation of the tension rod can also effect the desired adjustment. Preferably, identical forks are used in each case. As a matter of fact, it may also be sufficient to use only one fork. A further advantage of a tensioning device according to the present invention is that a longitudinal displacement of a first fork relative to the tension rod can be obtained independently of the position of a second fork or other suitable fastener provided at the opposite end of the tension rod. This is advantageous in particular if the second fork is, for instance, fitted in a position that is difficult to reach, or is fixedly connected to the tension rod or to the "fixed world", for instance in the form of an eye or the like welded or forged thereon.

In an advantageous embodiment, a tensioning device according to the invention is characterized by the features of claim 3.

In an assembled tensioning device, the cooperating first and second guide means prevent the tension rod from rotating relative to the fork over at least a portion of the adjusting range. The advantage thus achieved is that when the tensioning element is rotated, the desired longitudinal displacement of the fork relative to the tension rod is always obtained, without the fork and the tension rod having to be retained or at least secured against rotation. Thus, adjustment of the tensioning device becomes particularly simple, while moreover, the desired position of the fork, at least in rotational sense, is always maintained.

In further elaboration, a tensioning device according to the invention is characterized by the features of claim 4.

The use of a flattened end of the tension rod as, or at least at the first guide means, offers the advantage that such embodiment can be manufactured in a relatively simple manner and that it enables a proper positioning of the first guide means relatively the second guide means. The fork can be fitted in two positions only, which, when a symmetrical fork is used, are mirror-symmetrical. Of course, differently shaped first and, cooperating therewith, second guide means can also be applied, in which case for instance several positions of the fork relative to the tension rod are possible.

In a first further embodiment, a tensioning device according to the invention is characterized by the features of claim 5.

When the first guide means on both ends of the tension rod are equally directed, the forks will adopt equal positions with respect to the tension rod, i.e. the eyes or arms or like fasteners thereof will be located in parallel, possibly coinciding planes. It is thus achieved that the structural members to be coupled are in each case equally directed.

In an alternative embodiment, a tensioning device according to the invention is further characterized by the features of claim 6.

When the first guide means on opposite ends of the tension rod are directed differently, the forks can be positioned in two planes enclosing an angle relative to each other. Thus, structural elements that are displaced relative to each other can for instance be coupled.

In a further advantageous embodiment, a tensioning device according to the invention is characterized by the features of claim 8.

Locking means for bounding at least the longitudinal displacing possibility of the tensioning element relative to the fork and/or the longitudinal displacing possibility of the tension rod relative to the tensioning element offer the advantage that it is in each case ensured that, during use, at least the minimally required screw thread length is used, so that the connection is sufficiently strong. Moreover, the tensioning device is prevented from becoming detached unintentionally.

In a particularly advantageous embodiment, such a tensioning device is further characterized by the features of claim 9.

Through the use of a locking pin extending into a groove on the tensioning element and/or into a groove on the tension rod, the longitudinal displacement of the fork relative to the tensioning element or, respectively, of the tensioning element relative to the tension rod, can readily be bounded. In particular when cooperating first and second guide means are provided, the use of only one locking pin may suffice, as the bounding of the freedom of movement of the tensioning element relative to the fork directly limits the freedom of movement of the tension rod relative to the tensioning element, while limitation of the freedom of movement of the tensioning element relative to the tension rod also directly limits the freedom of movement of the fork relative to the tensioning element. Indeed, the cooperating guide means prevent rotation of the tension rod relative to the fork. If no guide means are provided, it is preferred that at least two locking means be provided, one for limiting the freedom of movement of the fork relative to the tensioning element and one for limiting the freedom of movement of the tension rod relative to the tensioning element. Since the or each locking pin is arranged on the side of the relevant external screw thread facing away from the fastening element of the fork, the advantage achieved is that the fork or, respectively, the tensioning element is not weakened by the bore necessary for the locking pin, at least not so in a portion that is loaded during use and that transmits pulling or pushing forces. Thus, the full strength of the tensioning device is maintained, without this requiring special provisions.

The invention further relates to a method for at least partially suspending a structural element according to the invention, characterized by the features of claim 10.

The invention moreover relates to a fork and a tensioning element for use in a tensioning device according to the invention or in a method according to the invention, characterized by the features of claims 11 and 12 respectively. Further, the invention relates to a wind bracing or a like construction, comprising at least one tensioning device according to the invention.

Further advantageous embodiments of a tensioning device according to the invention are presented in the subclaims.

To clarify the invention, a number of exemplary embodiments of a tensioning device and a method according to the invention will hereinafter be described with reference to the accompanying drawings. In these drawings:
Fig. 1 is a slightly schematic, perspective view of a portion of a disassembled tensioning device according to the invention;
Fig. 2 is a sectional side elevation of the portion of a tensioning device according to Fig. 1, in disassembled condition;
Fig. 3 is a sectional side elevation of a tensioning device according to Figs. 1 and 2, in three adjusting positions;
Fig. 4 is a rear view of a fork; and
Figs. 5A-5E show a number of alternative embodiments of tensioning devices according to the invention.

In this specification, identical or corresponding parts have identical or corresponding reference numerals. In the embodiment shown, a fork-shaped fastening element is presented, but other fastening elements, for instance eye-shaped, may also be applied. In this specification, this will be referred to as 'fork'.

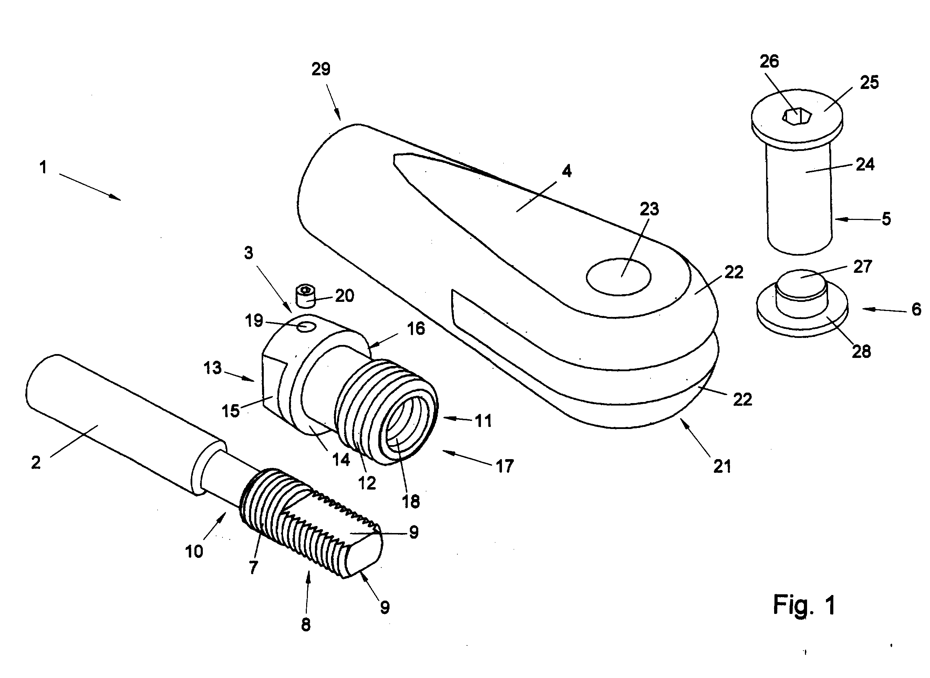

Fig. 1 is a schematic, perspective view of a disassembled tensioning device 1 according to the invention, or at least a first end thereof. The tensioning device 1 comprises a tension rod 2, a tensioning element 3, a fork 4 and a locking bush 5 with check nut 6.

Adjacent the end shown, the tension rod 2 comprises a section having first external screw thread 7 from which a portion has been removed over an end part 8, on either side thereof, to form a flattened side 9, such that the end part 8 has a substantially rectangular cross section. At the other end of the external screw thread 7, a circular groove 10 connects thereto. The purpose of the end part 8 and the groove 10 will be further described hereinbelow.

The tensioning element 3 is provided, on the outside and adjacent a first end 11, with second external screw thread 12, and at the opposite second end 13 with a relatively large head 14 having flattened sides 15 for engagement with a tool such as a nut spanner. Provided between the second external screw thread 12 and the head 14 is a second groove 16 having a smooth bottom face. The tensioning element 3 is provided with a through bore 17 having second internal screw thread 18 which can mate with the first external screw thread 7 on the tension rod 2. In the head 14, a radial bore 19 is provided, into which a locking pin 20 can be screwed. This will be further discussed hereinbelow.

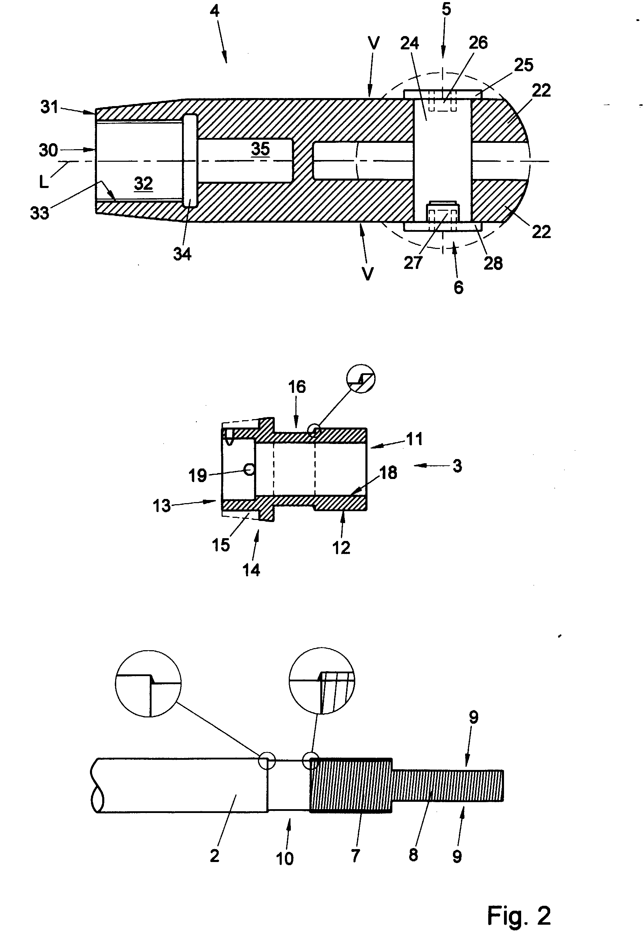

The fork 4 has an end face 21 thereof provided with two arms 22 extending parallel to each other, while a bore 23 is provided through the two arms 22 for receiving the locking bush 5 and the check nut 6. The locking bush 5 has a shank 24 which is fittingly receivable in the bore 23, and a first end flange 25 with hexagon socket 26, which end flange 25 can abut against the outside of the arm 22 around the bore 23. In that position, the free end of the shank 24 extends almost to the outer surface of the opposite arm 22, such that the check nut 6 with hexagon socket, comprising a stub part 27 having external screw thread, can be screwed into the free end of the shank 24, for retention thereof in the fork 4. To that end, the check nut 6 comprises a second end flange 28 which can fittingly abut against the outside of the relevant arm 22. This position is shown in more detail in Fig. 2. The shank 24 can for instance be passed through an opening in a plate part, wire loop or loop of a rod passed between the arms 22, allowing the fork to be coupled to the relevant construction part.

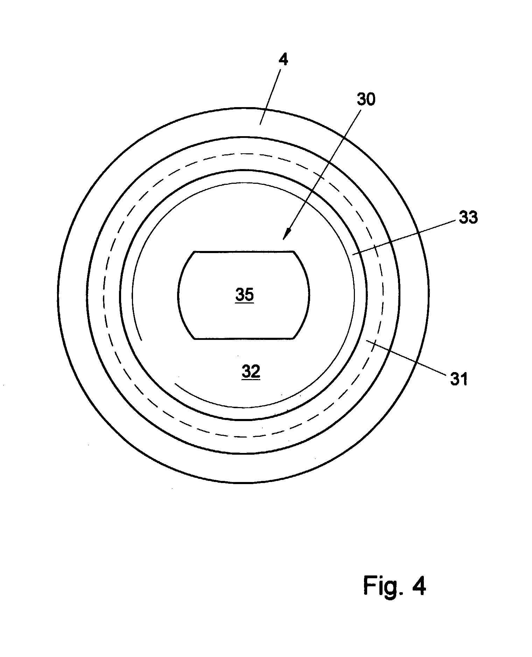

Provided in the base part 29 of the fork 4 located opposite the end face 21 is a bore 30 that extends at right angles to the fend face 31. A top plan view of the end face 31 is given in Fig. 4. The bore 30 comprises a first part 32 connecting to the end face 31 and has a first internal screw thread 33. This first internal screw thread 33 can mate with the second external screw thread 12 on the tensioning element 3. Connecting to the first part 32 is a second part 34 having a relatively small longitudinal length and a cross section greater than the cross section of the first part 32. The first part 32 and the second part 34 both have a circular cross section. Connecting to the second part 34, on the side facing away from the first part 32, is a third part 35, whose cross section substantially corresponds to the cross section of the end part 8 of the tension rod 2. The walls of the third part 35 are designed so that the end part 8 can be slidingly received therein with a proper fit. Hence, the end part 8 and the third part 35 of the bore 30 constitute first guide means 8 and second guide means 35 respectively. If the end part 8 is at least partially received in the third part 35 of the bore 30, rotation of the tension rod 2 about the longitudinal axis L is readily prevented, while displacement in the longitudinal direction of the fork relative to the tension rod is still possible. The purpose hereof will be further discussed hereinbelow.

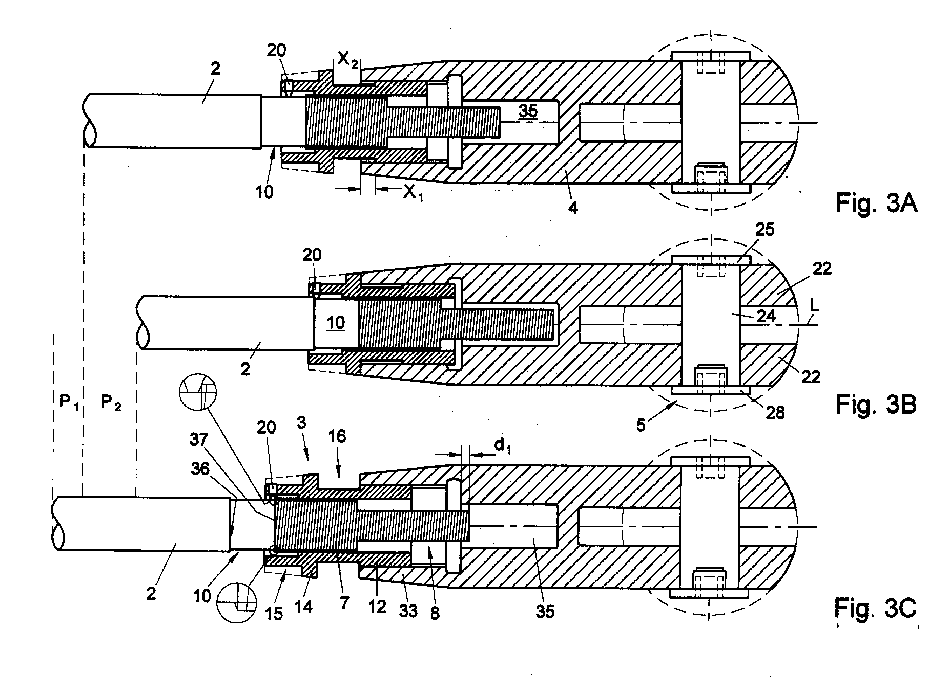

Fig. 3 shows, in section, a first end of a tensioning device according to the invention in assembled condition, in three adjusting positions. Fig. 3a shows the tensioning device in a central position, Fig. 3b shows the tensioning device in a fully screwed-in condition and Fig. 3c shows the tensioning device in a fully unscrewed condition. For clarity's sake, the end 8 is received with some space in the third part 35 of the bore 30, but in practice, this fit will be such that at least the flattened sides 9 of the end 8 abut at least substantially against the inner walls of said third part 35.

If, from the position shown in Fig. 3, the tensioning element 3 is rotated such that it moves outwards with respect to the bore 30, the tension rod 2 will, owing to the fact that it cannot rotate relative to the fork 4, be moved longitudinally in the direction away from the fork 4, due the mating first external screw thread 7 and second internal screw thread 18, whose hand is opposite to the hand of the mating first internal screw thread 33 and second external screw thread 12. Accordingly, an adjustment of the tensioning element 3 through a distance X₁ relative to the fork 4 effects an adjustment of the tension rod 2 relative to the fork 4 through a distance P₁. If, from the condition shown in Fig. 3a, the tensioning element 3 is fully screwed into the bore 30, the tension rod 2 is moved in longitudinal direction, for reasons stated above, in the direction of the fork 4. An inward displacement of the tensioning element 3 through a distance X₂ produces a displacement of the tension rod 2 relative to the fork 4 through a distance P₂. The sum of the distances X₁ and X₂ is considerably less than the sum of the distances P₁ and P₂. In the exemplary embodiment shown, the maximal displacement of the tensioning element 3 relative to the fork 4 (X₁ + X₂) is approximately equal to half the maximal displacement of the tension rod 2 relative to the fork 4 (P₁ + P₂). This ratio can be chosen depending on the selected pitch of the different mating screw threads.

Fig. 3 schematically shows the locking pin 20, extending into the groove 10 on the tension rod 2. Fig. 3 shows the locking pin 20 in a plane shifted over 90° relative to-its position in Figs. 1 and 2. As appears from Fig. 3b, the locking screw strikes a first end edge 36 of the groove 10 when the tension rod has been slid maximally into the fork 4, with the head 14 abutting against the fork 4. When the tension rod 2 has moved maximally outwards with respect to the fork 4, the locking pin 20 strikes the end of the first external screw thread 7, which defines a second end edge 37 of the groove 10. In this position, the end part 8 still extends into the third part 35 of the bore 30 at least over a length d₁, so that rotation of the tension rod with respect to the fork is still prevented. The effect thus achieved is that due to the bounding of the freedom of movement of the tension rod 2 with respect to the tensioning element 3, the relative movement of the tensioning element 3 with respect to the fork 4 is bounded as well, so that only one locking pin is necessary. If required, further locking means may be provided whereby the tensioning element 3 can be secured in a selected adjusting position with respect to the fork and/or the tension rod 2, to prevent unintended displacements. As the locking pin 20 is located on the side of the first external screw thread 7 facing away from the free end part 8, the tensioning element 3 is not weakened by the bore necessary for the locking pin. In the embodiment shown, the end edges 36, 37 are beveled, as is the inner end of the locking pin. The beveled end edges 36, 37 are simple in terms of production and offer, together with the associated locking pin 20, a proper contact face. However, the edges and the locking pin may also be, for instance, straight.

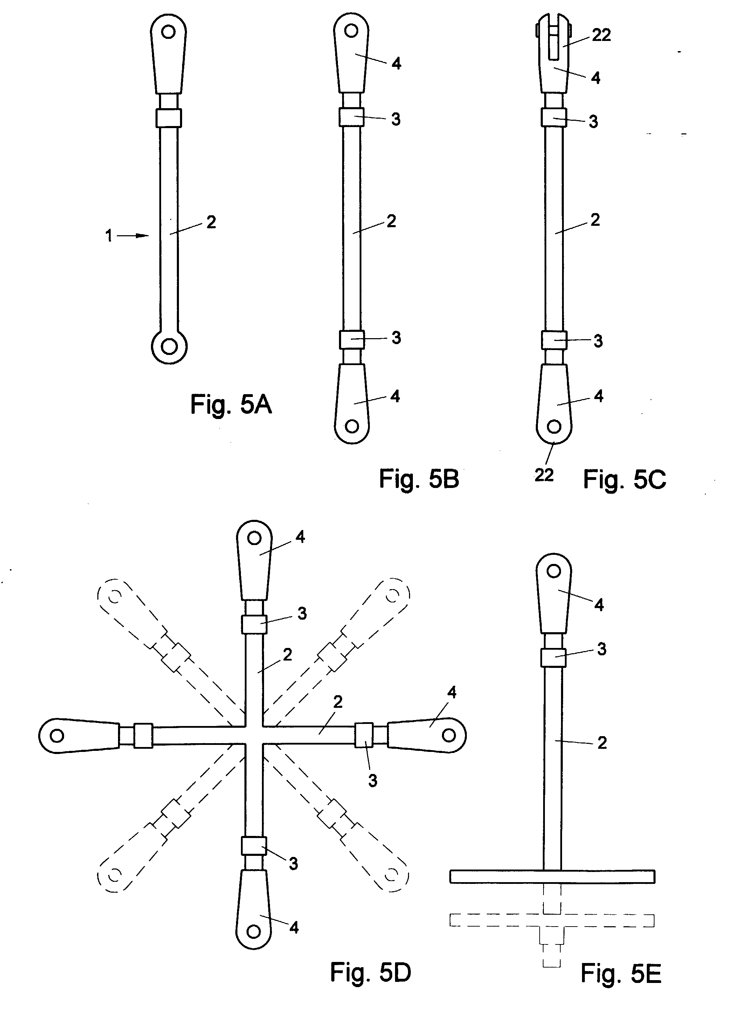

A tensioning device 1 according to the invention may be of substantially symmetrical design, in the sense that to either end of the tension rod 2, a fork 4 is attached by means of a tensioning element 3 (Figs. 5B and 5C), so that a length change can be realized between the two forks 4 corresponding to twice (P₁ + P₂). However, it is also possible to attach a different fastening element, for instance a fork of the known type, to one of the two ends of the tension rod 2 without intermediate tensioning element, and it is also possible to attach the other end of the tension rod 2 directly to any structural member, for instance by a loop formed integrally with the tension rod, for instance through welding or forging (Fig. 5A), or to fixedly weld the other end to a structural member (Fig. 5E). Indeed, unlike the known tensioning device, linear displacement of the fork can be obtained without the tension rod having to be rotated therefor. This also means that, for instance, a number of tension rods can be interconnected, for instance so as to be cross-shaped or star-shaped, while each tension rod may have a free end thereof provided with a tensioning element and a fork (Fig. 5D). Thus, in a particularly simple and relatively cheap manner, a great freedom of design is obtained. Moreover, the assembly operation can thus be simplified considerably.

In the embodiment shown in the drawing, the end part 8 has a symmetrical, flattened shape, allowing the fork to be slid thereon in two mirror-symmetrical positions (Fig. 5B). This involves the parallel planes V defined by the arms 22 always being in the same position. However, it is also possible to give the end part 8 a different, preferably symmetrical, polygonal shape, so that the fork is slidable on the end part 8 in several positions rotated relative to the longitudinal axis L. To that end, the end part may for instance be triangular, quadrangular or polyangular. Accordingly, the position of the planes V can be set in a number of discrete steps, which is advantageous particularly if a fork is provided on either side of the tension rod 2, since structural members that have been rotated with respect to each other can thus be readily coupled to a tensioning device according to the invention (Fig. 5C). After all, the faces V of one fork can be rotated relative to the faces V of the other fork about the longitudinal axis L.

The invention is by no means limited to the exemplary embodiments given in the description of the drawings and the drawings. Many variations thereto are possible within the framework of the invention.

For instance, the fork 4 may be of different design, for instance having a closed eye or having differently shaped and/or several arms. Also, the fork may comprise, for instance, screwing or clamping means instead of or in addition to the arms, to which means for instance a tube, rod or cable can be fixedly screwed or clamped. Further, several tensioning elements may be included between a tension rod and a fork, to obtain a larger adjusting range. Moreover, kinematic reversals of the principle may be applied, for instance by providing the tension rod with internal screw thread and the fork with external screw thread, or by having the tensioning element engage for instance the outside of both the tension rod and the fork. Further, the locking pin 20 may be provided in the fork in a comparable manner, and engage the second groove 16 between the second external screw thread 12 and the head 14. Of course, the locking bush 5 may also be designed differently, for instance as a bolt that can be screwed into screw thread tapped in one of the arms 22. Moreover, locking rings and the like may for instance be used for securing a locking bush 5 in the fork 4. These and many comparable variations are understood to fall within the framework of the invention.

## Claims

1. A tensioning device for tension bars and/or compression bars or like elements, comprising at least one tension-rod and at least one fastening element to be referred to as fork, the tension rod being provided, adjacent at least one end thereof, with a first external screw thread and the fork being provided with a bore having first internal screw thread, the fork comprising fastening means, **characterized in that** a tensioning element is provided for coupling the at least one tension rod and the at least one fork, the tensioning element having a first side thereof provided with second internal screw thread for mating with the first external screw thread and having a second side thereof provided with second external screw thread for mating with the first internal screw thread, the arrangement being such that through relative rotation of the tensioning element with respect to the fork and/or the tension rod, a longitudinal displacement of the fork with respect to the tension rod is effected.

2. A tensioning device according to claim 1, wherein the first internal screw thread and the first external screw thread, respectively the second internal screw thread and the second external screw thread are provided with opposite hands.

3. A tensioning device according to claim 1 or 2, wherein the bore in the fork, viewed in screw-in direction of the tensioning element, comprises a first part which lies in front position and has the first internal screw thread, and a second part which lies in rear position and comprises first guide means capable of cooperating with second guide means at the end of the tension rod located adjacent the first external screw thread, said first and second guide means in the cooperating position substantially preventing rotation of the tension rod relative to the fork.

4. A tensioning device according to claim 3, wherein the first guide means comprise a flattened end of the tension rod and the second guide means comprise a portion of the bore having a cross section that substantially corresponds to the associated cross section of the flattened portion.

5. A tensioning device according to claim 3 or 4, wherein the tension rod is provided on two sides with first external screw thread and first guide means for cooperating with second guide means, wherein the position of the first guide means at a first end of the tension rod is equally directed to that of the first guide means at the second end of the tension rod, the arrangement being such that the arms of forks coupled to the relevant first external screw thread lie in parallel planes.

6. A tensioning device according to claim 3 or 4, wherein the tension rod is provided on two sides with first external screw thread and first guide means for cooperating with second guide means, wherein the first guide means at a first end of the tension rod enclose an angle with the first guide means at the second end of the tension rod, the arrangement being such that the arms of forks coupled to the relevant first external screw thread lie in planes that enclose an angle relative to each other.

7. A tensioning device according to any one of claims 3-6, wherein the first and second guide means are designed so that they can cooperate in a discrete number of positions staggered around the longitudinal axis of the tensioning device, wherein the guide means preferably comprise a body having a regularly shaped, polygonal cross section.

8. A tensioning device according to any one of the preceding claims, wherein the tensioning element and/or the fork comprise locking means for bounding at least the longitudinal displacing possibility of the tensioning element relative to the fork and/or the longitudinal displacing possibility of the tension rod relative to the tensioning element.

9. A tensioning device according to claim 8, wherein the locking means comprise at least one locking pin that extends either:
- through the tensioning element, preferably in radial direction, whose inner end can extend into a circular groove in the tension rod, which groove is located on the side of the first external screw thread that, during use, faces away from the fork; or
- through the fork, preferably in radial direction, whose inner end can extend into a circular groove in the tensioning element, which groove is located on the side of the second external screw thread that, during use, faces the tension rod;
the arrangement being such that the relative freedom of movement of the locking pin relative to the groove is bounded in longitudinal direction by at least the edges of the groove.

10. A method for at least partially suspending a constructional element by means of a tensioning device according to any one of the preceding claims, wherein:
- on at least one end of a tension rod, a tensioning element is provided;
- on the at least one tensioning element, a fork is screwed;
- the at least one tensioning element is subsequently rotated so that the relevant first and second guide means are brought into a position in which they cooperate with each other; after which
- the at least one fork is coupled to a structural member;
- and the at least one tensioning element is subsequently rotated so that in the at least one structural member, the desired tension is obtained through longitudinal displacement of the relevant fork relative to the tension rod without involving rotation of the fork relative to the tension rod.

11. A fork for use in a tensioning device according to any one of claims 1-9 or in a method according to claim 10.

12. A tensioning element for use in a tensioning device according to any one of claims 1-9, in a method according to claim 10 or with a fork according to claim 11.

13. A wind bracing or like construction, comprising at least one tensioning device according to any one of claims 1-9.
